# DEMANDE DE BREVET EUROPEEN

(11) **EP 4 796 824 A1**
(43) Date de publication de la demande: **26.08.2026**
(21) Numéro de dépôt: 26159852.8
(22) Date de dépôt: 20.02.2026
(51) Int. Cl.: F16L 23/00, F16L 23/16

(54) **DISPOSITIF DE CONNEXION FLUIDIQUE POUR UN CIRCUIT DE FLUIDE**

(30) Priorité: 24.02.2025 FR 2501856
(71) Demandeur: Hutchinson, 92110 Clichy (FR)
(72) Inventeur: LESTIENNE, Stéphane, 45110 Chateauneuf sur Loire (FR); HOUSSIN, Alexandre, 45210 La Selle sur le Bied (FR)
(74) Mandataire: Gevers & Orès

(57) **Abrégé**

Dispositif (110) de connexion fluidique pour un circuit de fluide, ce dispositif de connexion comportant :
- une première bride de raccordement (112),
- une plaque de support (116),
- une olive de transfert (118) qui est portée par la plaque (116), et
- une vis de fixation (20),
l'olive (118) étant montée avec un jeu axial (J) dans un orifice (142) de la plaque (116).

## Description

### Domaine technique de l'invention

L'invention concerne un dispositif de connexion fluidique pour un circuit de fluide, ainsi qu'un circuit de fluide, par exemple de climatisation ou de direction assistée, pour un véhicule en particulier automobile.

### Arrière-plan technique

D'une manière générale, les circuits de climatisation et de direction assistée pour véhicules automobiles sont pourvus de dispositifs de connexion étanche aux fluides y circulant entre les extrémités en regard de deux tubes de ces circuits qui, dans le cas particulier de circuits de climatisation utilisant le dioxyde de carbone à haute pression, notamment, génèrent des fuites de ce fluide frigorigène devant être typiquement de l'ordre de 0,5 g de CO2 par an.

On a donc cherché de longue date à améliorer ces dispositifs de connexion en utilisant deux brides de raccordement à ces tubes qui sont assemblées l'une à l'autre par une vis de serrage déportée et qui font communiquer les tubes entre eux par un embout de transfert monté de manière étanche dans ces brides par assemblage de type conique/sphérique procurant de manière bien connue des cercles de contact étanche.

On peut par exemple citer le document DE-U1-202 20 520 pour une description d'un tel dispositif, dans lequel l'embout est en outre monté sur des extrémités tronconiques de ces tubes via des joints d'étanchéité.

La Demanderesse a en outre déjà proposé dans le document EP-A1-2 103 857 un dispositif de connexion conforme au préambule de la revendication 1. L'utilisation d'un embout de transfert en forme d'olive est particulièrement efficace pour assurer une étanchéité comme évoqué dans ce qui précède.

En pratique, une olive de transfert est aujourd'hui dédiée à un assemblage de type conique/sphérique et il n'a pas été proposé de l'utiliser dans d'autres types d'assemblages. En particulier, il existe sur le marché des brides de raccordement qui ne comprennent pas de surface conique ou tronconique et qui ne sont pas aujourd'hui adaptée à être utilisée avec une olive de transfert.

Autrement dit, il existe un besoin d'une solution universelle qui permettrait d'associer une première bride comportant une surface tronconique coopérant avec une olive de transfert, avec une seconde bride quelconque. Cette seconde bride pourrait être similaire ou identique à la première bride et comprendre une surface tronconique apte à coopérer avec l'olive de transfert, ou pourrait comprendre une surface différente apte à coopérer avec l'olive pour réaliser une étanchéité à l'assemblage.

La présente invention apporte une solution simple, efficace et économique à ce besoin.

### Résumé de l'invention

La présente invention propose un dispositif de connexion fluidique pour un circuit de fluide, ce dispositif de connexion comportant :
- une première bride de raccordement formée par un bloc métallique et comportant deux faces parallèles, une première de ces faces comportant un premier orifice apte à recevoir une extrémité d'un tuyau, une seconde de ces faces comportant un premier logement qui est en communication fluidique avec le premier orifice et qui est aligné sur ce premier orifice, le premier logement comportant une surface interne tronconique, la première bride comportant en outre un premier passage,
- une plaque de support qui est apte à être plaquée contre la seconde face de la première bride et qui comprend un premier orifice aligné avec le premier logement, la plaque comportant en outre un second passage aligné avec le premier passage,
- une olive de transfert qui est portée par la plaque, cette olive étant engagée dans le premier orifice de la plaque et comportant une gorge annulaire externe dans laquelle est engagée un bord annulaire interne du premier orifice de la plaque, l'olive ayant un axe longitudinal et ayant un plan médian transversal de symétrie, l'olive comportant des extrémités axiales qui sont chacune aptes à être engagées dans le premier logement et à prendre appui sur la surface tronconique, et
- une vis de fixation qui traverse les premier et second passages,
caractérisé en ce que la gorge annulaire de l'olive a une épaisseur ou dimension axiale qui est supérieure à une épaisseur du bord interne de la plaque de façon à ce que l'olive soit montée avec un jeu axial dans le premier orifice de la plaque et que l'olive puisse, lorsque l'une des extrémités axiales de l'olive est engagée dans le premier logement et prend appui sur la surface tronconique, adopter une position axiale dans laquelle son plan de symétrie est décalé par rapport à un plan de la plaque.

La particularité de l'invention et du dispositif de connexion selon l'invention est que son olive est montée avec jeu, en particulier dans l'axe de l'olive, dans l'orifice de la plaque. Ce jeu confère à l'olive une capacité de déplacement axial vis-à-vis de la plaque sur une course prédéterminée. Cette course permet de monter l'ensemble plaque et olive sur plusieurs types de bride et pas seulement une bride dont le logement de réception de l'olive comprend une surface tronconique d'appui, ce qui est avantageux. L'ensemble plaque et olive forme donc une ensemble universel qui peut être utilisé sur plusieurs types et référence de bride. Par ailleurs, l'invention permet d'éviter un mauvais montage de l'ensemble plaque et bride entre deux brides. Dans le cas où les logements des deux brides n'auraient pas la même profondeur, l'olive sera davantage engagée dans un logement que dans l'autre logement. Quelle que soit la face de la plaque qui est appliquée contre la seconde face de la bride comportant le logement de plus petite profondeur par exemple, l'olive va ajuster sa position axiale dans l'orifice de la plaque et il n'est pas possible de réaliser un mauvais positionnement et un mauvais montage de l'ensemble entre les brides.

Le dispositif selon l'invention peut comprendre une ou plusieurs des caractéristiques suivantes, considérées indépendamment les unes des autres ou en combinaison les unes avec les autres :
- le dispositif comprend une seconde bride de raccordement formée par un bloc métallique et comportant deux faces parallèles, une première de ces faces comportant un premier orifice apte à recevoir une extrémité d'un autre tuyau, une seconde de ces faces comportant un second logement qui est en communication fluidique avec le premier orifice et qui est aligné sur ce premier orifice, la seconde bride comportant en outre un troisième passage ;
- la plaque est apte à être intercalée entre les secondes faces des première et seconde brides ;
- les extrémités axiales de l'olive sont respectivement engagées dans les premier et second logements des première et seconde brides ;
- la vis de fixation traversant les premier, second et troisième passages ;
- le second logement comporte une surface interne tronconique, les extrémités axiales de l'olive étant respectivement en appui sur les surfaces tronconiques des premier et second logements ;
- la surface tronconique du second logement est située à une distance de la seconde face de la seconde bride, qui est supérieure à une distance entre la surface tronconique du premier logement et la seconde face de la première bride, ces deux distances étant mesurées dans une même direction perpendiculaire aux secondes faces respectives ;
- le second logement comporte une surface interne cylindrique et une portée axiale cylindrique, l'une des extrémités axiales de l'olive étant en appui sur la surface tronconique du premier logement, et l'autre des extrémités axiales de l'olive étant entourée par la surface cylindrique et en appui axial sur la portée cylindrique du second logement ;
- l'autre des extrémités axiales de l'olive est en appui axial sur la portée cylindrique du second logement par une face radiale de cette extrémité ;
- la portée cylindrique est crantée ou comprend des nervures annulaires concentriques ;
- l'épaisseur de la gorge est au moins 1,5 fois supérieure à l'épaisseur du bord interne ;
- l'épaisseur de la gorge est au moins 2 fois supérieure à l'épaisseur du bord interne ;
- l'épaisseur de la plaque est constante ;
- la première bride comprend sur sa seconde face un bossage ou un méplat d'indexage apte à coopérer par complémentarité de formes avec la plaque ;
- le bossage ou le méplat a une épaisseur qui représente entre 75% et 100 % de l'épaisseur de la plaque ;
- l'olive a une capacité de déformation élastique par compression axiale, par serrage de ladite vis ;
- la plaque est réalisée dans un matériau choisi parmi un alliage métallique et un matériau élastiquement déformable ;
- l'olive est réalisée dans un matériau choisi parmi un alliage métallique et un matériau élastiquement déformable ;
   -- l'olive a une forme générale tubulaire ;
   -- le ou chaque bloc a une forme générale parallélépipédique ;
   -- les extrémités de l'olive sont en portions de sphère de préférence et comportent donc chacune une surface annulaire en portion de sphère.

La présente invention concerne encore un circuit de fluide, par exemple de climatisation ou de direction assistée, pour un véhicule en particulier automobile, comportant au moins un dispositif tel que décrit ci-dessus.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
la figure 1 est une vue schématique en perspective et en coupe d'un dispositif de connexion de la technique antérieure ;
la figure 2 est une vue schématique en perspective d'un ensemble comportant une plaque de support et une olive de transfert, pour un dispositif de connexion selon l'invention ;
la figure 3 est une autre vue schématique en perspective de l'ensemble de la figure 2 ;
la figure 4 est une vue schématique en perspective d'une première bride de raccordement pour un dispositif de connexion selon l'invention ;
la figure 5 est une vue schématique en perspective de l'ensemble des figures 2 et 3 avec la bride de la figure 4 ;
la figure 6 est une vue schématique en coupe de l'ensemble des figures 2 et 3 avec la bride de la figure 4 ;
la figure 7 est une vue schématique en perspective d'une seconde bride de raccordement pour le dispositif de connexion selon l'invention ;
la figure 8 est une vue schématique en coupe du dispositif de connexion selon l'invention comportant l'ensemble des figures 2 et 3 et les brides des figures 4 et 7 ;
la figure 9 est une vue schématique en perspective et en coupe d'une variante de réalisation de la seconde bride de raccordement pour le dispositif de connexion selon l'invention ;
la figure 10 est une vue schématique en perspective et en coupe partielle du dispositif de connexion selon l'invention comportant l'ensemble des figures 2 et 3 et les brides des figures 4 et 9 ; et
la figure 11 est une autre vue schématique en coupe du dispositif de connexion selon l'invention comportant l'ensemble des figures 2 et 3 et les brides des figures 4 et 9.

### Description détaille de l'invention

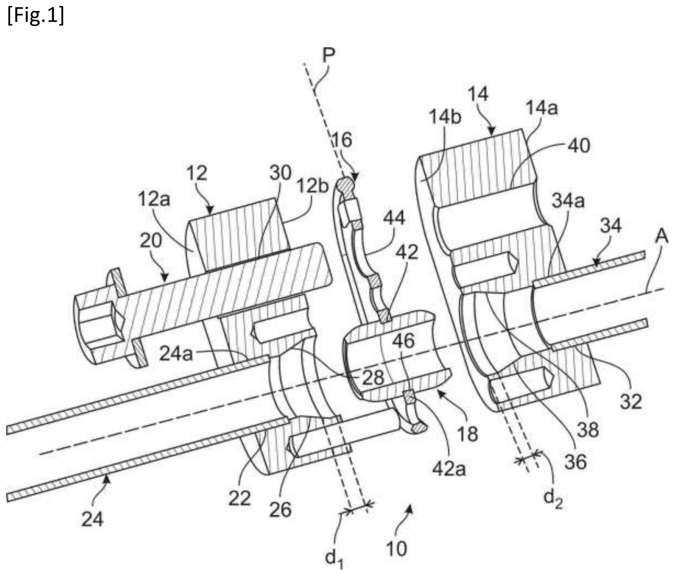

On se réfère d'abord à la figure 1 qui représente un dispositif 10 de connexion fluidique selon la technique antérieure, tel que décrit dans le document EP-A1-2 103 857.

Le dispositif 10 comporte pour l'essentiel deux brides de raccordement 12, 14, une plaque de support 16, une olive de transfert 18 portée par la plaque 16, et une vis 20 de fixation ou de serrage des brides 12, 14 entre elles.

La première bride 12, à gauche sur le dessin, est formée par un bloc métallique et comporte deux faces 12a, 12b parallèles. Une première de ces faces 12a comporte un premier orifice 22 apte à recevoir une extrémité 24a d'un tuyau 24, en particulier métallique.

La seconde face 12b de la bride 12 comporte un premier logement 26 qui est en communication fluidique avec le premier orifice 22 et qui est aligné sur ce premier orifice 22.

Le premier logement 26 comporte une surface interne tronconique 28.

La première bride 12a comporte en outre un passage 30.

La seconde bride 14, à droite sur le dessin, est formée par un bloc métallique et comporte deux faces 14a, 14b parallèles. Une première de ces faces 14a comporte un premier orifice 32 apte à recevoir une extrémité 34a d'un autre tuyau 34.

La seconde face 14b de la bride 14 comporte un second logement 36 qui est en communication fluidique avec le premier orifice 32 et qui est aligné sur ce premier orifice 32.

Le second logement 36 comporte une surface interne tronconique 38.

La seconde bride 36 comporte en outre un passage 40.

La plaque 16 est intercalée entre les brides 12, 14 et apte à être appliquée contre les face 12b, 14b en regard de ces brides 12, 14.

La plaque 16 comprend un premier orifice 42 aligné avec les logement 26, 36 des brides 12, 14 et un passage 44 aligné avec les passages 30, 40 des brides 12, 14.

L'olive 18 est portée par la plaque 16 et en particulier engagée dans l'orifice 42 de la plaque 16. L'olive 18 comporte une gorge annulaire externe 46 dans laquelle est engagée un bord annulaire interne 42a de l'orifice 42 de la plaque 16.

L'olive 18 a un axe longitudinal A et a un plan médian transversal de symétrie P. L'olive 18 comporte des extrémités axiales qui sont engagées respectivement dans les logements 26, 36 des brides 12, 14 et qui sont en appui sur les surfaces tronconiques 26a, 36a de ces logements 26, 36.

La vis 20 traverse les passages 30, 40 et 44 et serre les brides 12, 14 entre elles. Dans le dispositif de connexion de la figure 1, l'olive 18 est montée sans jeu dans l'orifice 42 de la plaque 16. La plaque 16 s'étend dans le plan P. Par ailleurs, les logements 26, 36 des brides 12, 14 sont identiques, les distances d1, d2 de leurs surfaces tronconiques 26a, 36a aux surfaces 12b, 14b étant identiques.

On va maintenant décrire un mode de réalisation d'un dispositif de connexion 110 selon l'invention.

Dans le cadre de la présente invention, le dispositif de connexion 110 est défini comme comportant au moins une bride, une plaque de support, une olive de transfert, et une vis de fixation. Comme cela sera expliqué dans ce qui suit, ce dispositif de connexion peut comprendre une seconde bride qui peut être du même type que celle de la première bride ou d'un type différent.

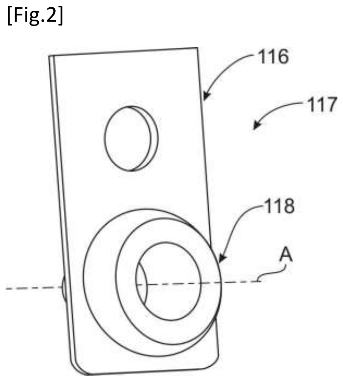

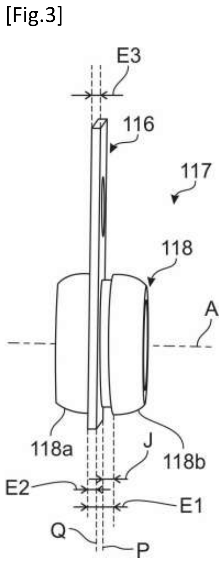

Les figures 2 et 3 illustrent un mode de réalisation de l'ensemble 117 formé par la plaque de support 116 et l'olive de transfert 118 d'un dispositif de connexion 110 conforme à l'invention.

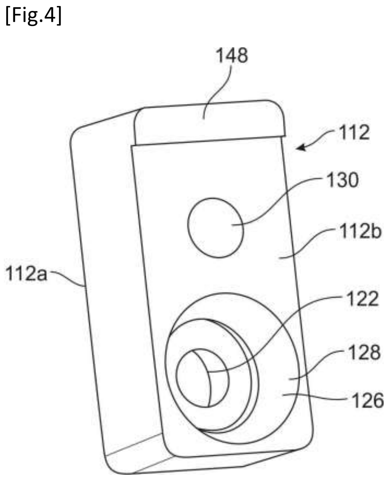

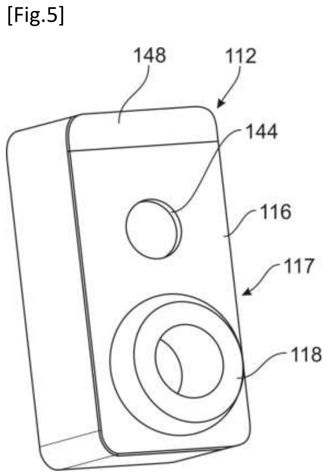

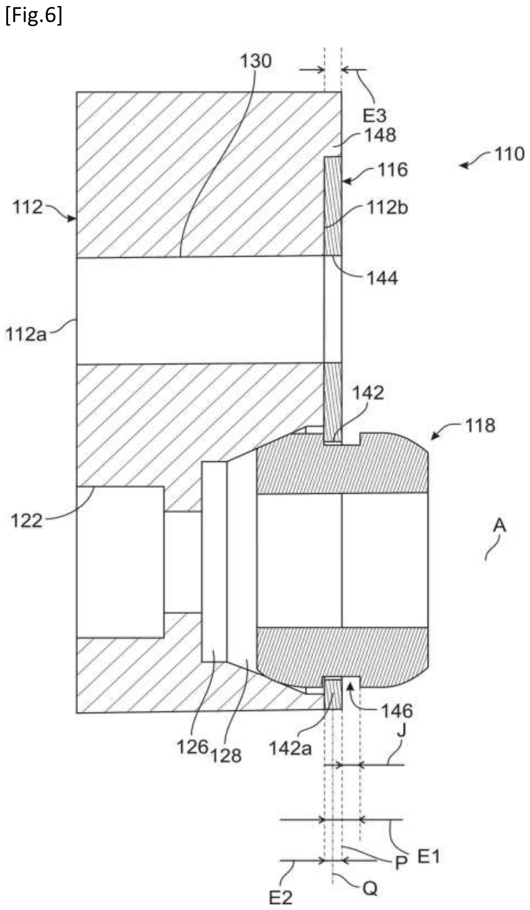

La figure 4 montre un mode de réalisation de la première bride 112 et les figures 5 et 6 montrent l'ensemble 117 et la première bride 112 en position assemblée.

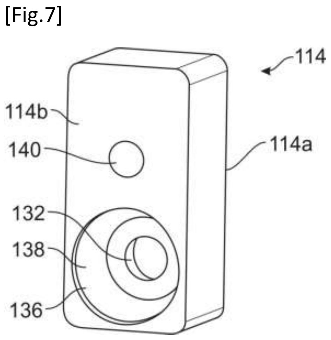

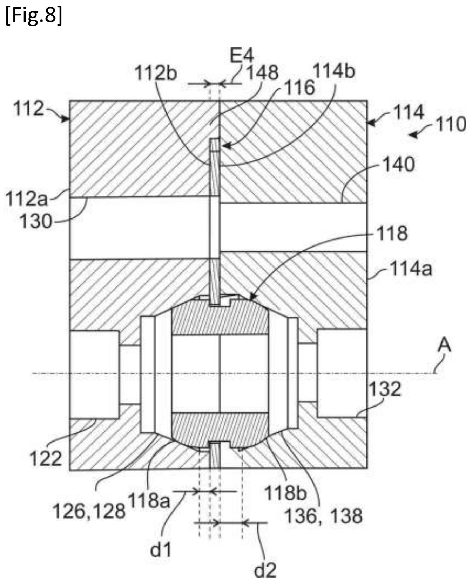

La figure 7 montre un mode de réalisation de la seconde bride 114 et la figure 8 montre l'ensemble 117 et les brides 112, 114 en position assemblée.

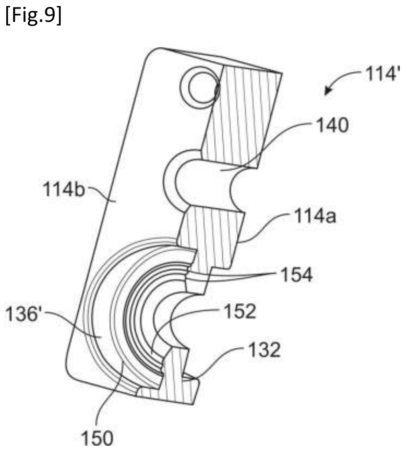

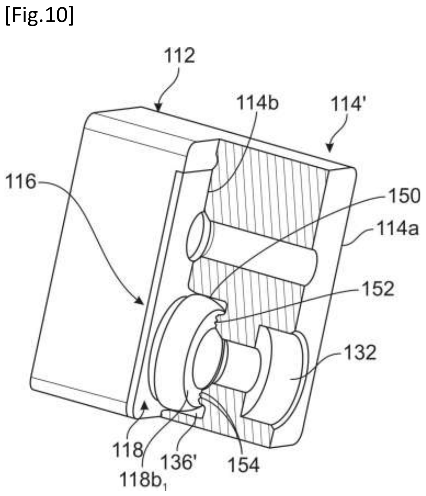

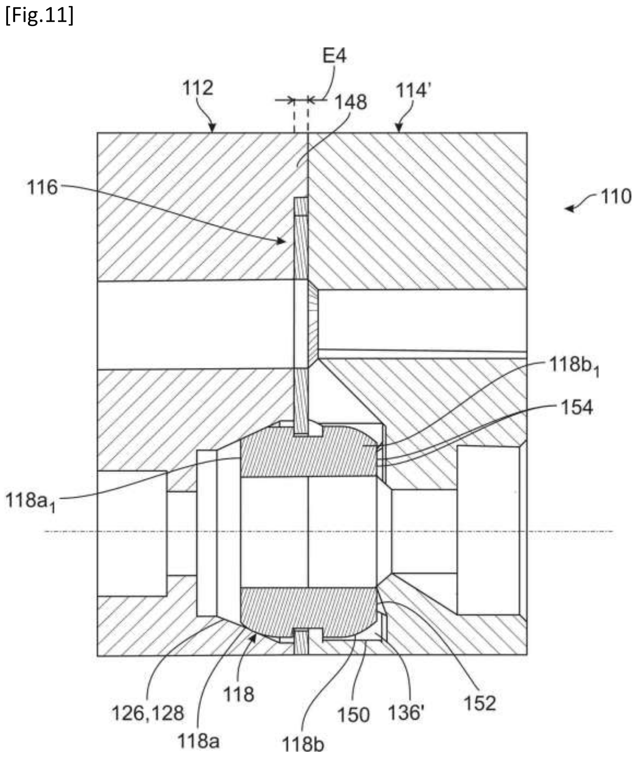

La figure 9 montre une variante de réalisation de la seconde bride 114' et les figures 10 et 11 montrent l'ensemble 117 et les brides 112, 114' en position assemblée.

En ce qui concerne la première bride 112, elle est formée par un bloc métallique, par exemple parallélépipédique, et comporte deux faces 112a, 112b parallèles. Une première de ces faces 112a comporte un premier orifice 122 apte à recevoir une extrémité 24a d'un tuyau 24, en particulier métallique, comme illustré à la figure 1.

La seconde face 112b de la bride 112 comporte un premier logement 126 qui est en communication fluidique avec le premier orifice 122 et qui est aligné sur ce premier orifice 122.

Le premier logement 126 comporte une surface interne tronconique 128.

La première bride 112a comporte en outre un passage 130.

En ce qui concerne l'ensemble 117 représenté aux figures 2 et 3 notamment, il comprend donc l'olive de transfert 118 et la plaque de support 116.

La plaque 116 est destinée à être plaquée contre la face 112b de la bride 112, comme illustré aux figures 4 et 5.

La plaque 16 comprend un premier orifice 142 aligné avec le logement 126 de la bride 112 et un passage 144 aligné avec le passage 30 de la bride.

L'olive 118 est portée par la plaque 116 et en particulier engagée dans l'orifice 142 de la plaque 116. L'olive 118 comporte une gorge annulaire externe 146 dans laquelle est engagée un bord annulaire interne 142a de l'orifice 142 de la plaque 116.

L'olive 118 a un axe longitudinal A et a un plan médian transversal de symétrie P.

L'olive 118 a une forme générale tubulaire.

L'olive 118 comporte des extrémités axiales 118a, 118b dont une est engagée dans le logement 126 de la bride 112 et est en appui sur la surface tronconique 128 de ce logement 126, comme illustré à la figure 6.

Les extrémités 118a, 118b sont en portions de sphère de préférence et comportent donc chacune une surface annulaire centrée sur l'axe A en portion de sphère.

La particularité de la gorge 146 est qu'elle a une épaisseur E1 ou dimension axiale qui est supérieure à une épaisseur E2 du bord interne 142a de la plaque 116. Ainsi, l'olive 118 est montée avec un jeu axial J dans l'orifice 142 de la plaque 116. L'olive 118 peut ainsi, lorsque son extrémité 118a est engagée dans le logement 126, prendre appui sur la surface 128 par cette extrémité 118a et adopter une position axiale dans laquelle son plan de symétrie P est décalé par rapport au plan Q de la plaque 116 du côté opposé à la bride 112, ou à l'inverse, lorsque son extrémité 118b est engagée dans le logement 126, prendre appui sur la surface 142a par cette extrémité 118a et adopter une position axiale dans laquelle son plan de symétrie P est décalé par rapport au plan Q de la plaque 116 du côté opposé à la bride 112. Autrement dit, la position de l'olive 118 s'adapte du fait qu'elle est déplaçable axialement dans l'orifice 142 de la plaque 116.

L'épaisseur E1 de la gorge 146 est au moins 1,5 fois, voire 2 fois, supérieure à l'épaisseur E2 du bord interne 142a.

L'épaisseur E3 de la plaque 116 peut être constante et donc l'épaisseur E2 du bord 142a est égale à l'épaisseur E3 de la plaque 116.

La surface tronconique 128 du logement 126 est située à une distance d1 de la face 112b de la bride 112, mesurée le long de l'axe A.

Avantageusement, la bride 112 comprend sur sa face 112b un bossage ou un méplat d'indexage 148 apte à coopérer par complémentarité de formes avec la plaque 116 et en particulier avec un bord périphérique de la plaque 116 comme illustré aux figures 5 et 6.

Les figures 7 et 8 illustrent un premier mode de réalisation de la seconde bride 114.

La seconde bride 114 est formée par un bloc métallique, par exemple parallélépipédique, et comporte deux faces 114a, 114b parallèles. Une première de ces faces 114a comporte un premier orifice 132 apte à recevoir une extrémité 34a d'un autre tuyau 34, tel que celui illustré à la figure 1.

La seconde face 114b de la bride 114 comporte un second logement 136 qui est en communication fluidique avec le premier orifice 132 et qui est aligné sur ce premier orifice 132.

La seconde bride 114 comporte en outre un passage 140.

On comprend que la plaque 116 est apte à être intercalée entre les faces 112b, 114b des brides 112, 114.

Les extrémités axiales de l'olive 118 sont respectivement engagées dans les logements 126, 136 des brides 112, 114.

Une vis de fixation 20, telle que celle illustrée à la figure 1, traverse les passages 130, 140 et 144.

Dans l'exemple représenté, le second logement 136 comporte une surface interne tronconique 138.

Les extrémités axiales 118a, 118b de l'olive 118 sont respectivement en appui sur les surfaces tronconiques 128, 138 des logements 126, 136 (figure 8).

De préférence, la surface tronconique 138 du logement 136 est située à une distance d2 de la face 114b de la bride 114, qui est supérieure à la distance d1. La distance d2 est mesurée le long de l'axe A.

On voit donc à la figure 8 que l'olive 118 est davantage engagée dans le logement 136 que dans le logement 126. Même si l'ensemble formé par la plaque 116 et l'olive 118 était monté à l'envers, c'est-à-dire que l'extrémité 118a serait engagée dans le logement 136 et l'extrémité 118b serait engagée dans le logement 126, l'olive 118 serait davantage engagée dans le logement 136 que dans le logement 126 du fait de sa capacité de translation axiale à l'intérieur de l'orifice 142 de la plaque 116.

Les figures 9 à 11 illustrent un second mode de réalisation de la seconde bride 114'.

La bride 114' diffère de la bride 114 décrite dans ce qui précède essentiellement par son logement 136'.

Dans l'exemple représenté, le logement 136' comporte une surface interne cylindrique 150 et une portée axiale cylindrique 152.

L'une des extrémités axiales 118a de l'olive 118 est en appui sur la surface tronconique 128 du logement 126 de la bride 112, et l'autre des extrémités axiales 118b de l'olive 118 est entourée par la surface cylindrique 152 et est en appui axial sur la portée cylindrique 152.

On voit aux figures 10 et 11 que l'extrémité 118b de l'olive 118 prend appui axialement sur la portée cylindrique 152 par une face radiale 118b1 de cette extrémité 118b.

De préférence, la portée cylindrique 152 est crantée ou comprend des nervures annulaires concentriques 154.

On voit donc à la figure 11 que l'olive 118 est davantage engagée dans le logement 136' que dans le logement 126. Même si l'ensemble formé par la plaque 116 et l'olive 118 était monté à l'envers, c'est-à-dire que l'extrémité 118a serait engagée dans le logement 136' et l'extrémité 118b était engagée dans le logement 126, l'olive 118 serait davantage engagée dans le logement 136' et prendrait appui par une face radiale 118a1 de son extrémité 118a sur la portée cylindrique 152, du fait de sa capacité de translation axiale à l'intérieur de l'orifice 142 de la plaque 116.

Le bossage ou le méplat 148 a de préférence une épaisseur E4 qui représente entre 75% et 100% de l'épaisseur E3 de la plaque 116. Ceci permet à la plaque 116 d'être serrée axialement entre les brides 112, 114 ou 112, 114' assurant ainsi une étanchéité optimale du dispositif 110.

L'olive 118 a de préférence une capacité de déformation élastique par compression axiale, par serrage de la vis 20.

La plaque 116 peut être réalisée dans un matériau choisi parmi un alliage métallique et un matériau élastiquement déformable. La plaque 118 est de préférence en élastomère.

L'olive 118 peut être réalisée dans un matériau choisi parmi un alliage métallique et un matériau élastiquement déformable. L'olive 118 est par exemple réalisée en alliage de cuivre revêtue d'un alliage à base de zinc.

Par ailleurs, la forme sphérique de l'extrémité 118a de l'olive 118 qui est en appui sur la surface tronconique 128 du logement 126 de la bride 112, permet une rotation qui permet de rattraper à la fois le défaut de parallélisme entre la portée cylindrique 152 et la face d'appui du bossage ou méplat 148 et la différence entre l'épaisseur E4 du bossage ou méplat 148 et l'épaisseur E3 de la plaque de support 116.

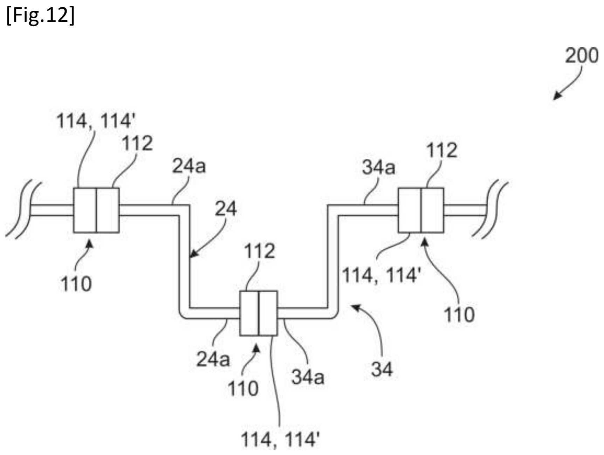

La figure 12 montre un exemple très schématique d'un circuit de fluide 200, par exemple de climatisation ou de direction assistée, pour un véhicule en particulier automobile, comportant un ou plusieurs dispositifs 110 tels que décrits dans ce qui précède et reliés les uns aux autres ou à des équipements (compresseur, pompe, etc.) du circuit par des tuyaux 24, 34.

## Revendications

1. Dispositif (110) de connexion fluidique pour un circuit de fluide, ce dispositif de connexion comportant :
- une première bride de raccordement (112) formée par un bloc métallique et comportant deux faces (112a, 112b) parallèles, une première de ces faces (112a) comportant un premier orifice (122) apte à recevoir une extrémité (24a) d'un tuyau (24), une seconde de ces faces (112b) comportant un premier logement (126) qui est en communication fluidique avec le premier orifice (124) et qui est aligné sur ce premier orifice (124), le premier logement (126) comportant une surface interne tronconique (128), la première bride (112) comportant en outre un premier passage (130),
- une plaque de support (116) qui est apte à être plaquée contre la seconde face (112b) de la première bride (112) et qui comprend un premier orifice (142) aligné avec le premier logement (126), la plaque (116) comportant en outre un second passage (144) aligné avec le premier passage (130),
- une olive de transfert (118) qui est portée par la plaque (116), cette olive (118) étant engagée dans le premier orifice (142) de la plaque (116) et comportant une gorge annulaire externe (144) dans laquelle est engagée un bord annulaire interne (142a) du premier orifice (142) de la plaque (116), l'olive (118) ayant un axe longitudinal (A) et ayant un plan médian transversal (P1) de symétrie, l'olive (118) comportant des extrémités axiales (118a, 118b) qui sont chacune aptes à être engagées dans le premier logement (126) et à prendre appui sur la surface tronconique (128), et
- une vis de fixation (20) qui traverse les premier et second passages (130, 144),
**caractérisé en ce que** la gorge annulaire (144) de l'olive (118) a une épaisseur (E1) ou dimension axiale qui est supérieure à une épaisseur (E2) du bord interne (142) de la plaque (116) de façon à ce que l'olive (118) soit montée avec un jeu axial (J) dans le premier orifice (142) de la plaque (116) et que l'olive (118) puisse, lorsque l'une des extrémités axiales de l'olive (118) est engagée dans le premier logement (126) et prend appui sur la surface tronconique (128), adopter une position axiale dans laquelle son plan de symétrie (P1) est décalé par rapport à un plan (P) de la plaque (116).

2. Dispositif (110) selon la revendication 1, dans lequel il comprend :
- une seconde bride de raccordement (114, 114') formée par un bloc métallique et comportant deux faces (114a, 114b) parallèles, une première de ces faces (114a) comportant un premier orifice (132) apte à recevoir une extrémité (34a) d'un autre tuyau (34), une seconde de ces faces (114b) comportant un second logement (136, 136') qui est en communication fluidique avec le premier orifice (132) et qui est aligné sur ce premier orifice (132), la seconde bride (114, 114') comportant en outre un troisième passage (140),
la plaque (116) étant apte à être intercalée entre les secondes faces (112b, 114b) des première et seconde brides (112, 114),
les extrémités axiales (118a, 118b) de l'olive (118) étant respectivement engagées dans les premier et second logements (126, 136, 136') des première et seconde brides (112, 114, 114'), et
la vis de fixation (20) traversant les premier, second et troisième passages (130, 140, 144).

3. Dispositif (110) selon la revendication 2, dans lequel le second logement (136) comporte une surface interne tronconique (138), les extrémités axiales (118a, 118b) de l'olive (118) étant respectivement en appui sur les surfaces tronconiques (128, 138) des premier et second logements (126, 136).

4. Dispositif (110) selon la revendication 3, dans lequel la surface tronconique (138) du second logement (136, 136') est située à une distance (d2) de la seconde face (114b) de la seconde bride (114), qui est supérieure à une distance (d1) entre la surface tronconique (128) du premier logement (126) et la seconde face (112b) de la première bride (112), ces deux distances (d1, d2) étant mesurées dans une même direction perpendiculaire aux secondes faces (112b, 114b) respectives.

5. Dispositif (110) selon la revendication 2, dans lequel le second logement (136') comporte une surface interne cylindrique (150) et une portée axiale cylindrique (152), l'une des extrémités axiales (118a) de l'olive (118) étant en appui sur la surface tronconique (128) du premier logement (126), et l'autre des extrémités axiales (118b) de l'olive (118) étant entourée par la surface cylindrique (150) et en appui axial sur la portée cylindrique (152) du second logement (136').

6. Dispositif (110) selon la revendication 5, dans lequel l'autre des extrémités axiales (118a, 118b) de l'olive (118) est en appui axial sur la portée cylindrique (152) du second logement (136') par une face radiale (118b1) de cette extrémité (118b).

7. Dispositif (110) selon la revendication 5 ou 6, dans lequel la portée cylindrique (152) est crantée ou comprend des nervures annulaires concentriques (154).

8. Dispositif (110) selon l'une des revendications précédentes, dans lequel l'épaisseur (E1) de la gorge (144) est au moins 1,5 fois supérieure à l'épaisseur (E2) du bord interne (142a).

9. Dispositif (110) selon la revendication précédente, dans lequel l'épaisseur (E1) de la gorge (144) est au moins 2 fois supérieure à l'épaisseur (E2) du bord interne (142a).

10. Dispositif (110) selon l'une des revendications précédentes, dans lequel l'épaisseur (E3) de la plaque (116) est constante.

11. Dispositif (110) selon l'une des revendications précédentes, dans lequel la première bride (112) comprend sur sa seconde face (112b) un bossage ou un méplat d'indexage (148) apte à coopérer par complémentarité de formes avec la plaque (116).

12. Dispositif (110) selon la revendication précédente, dans lequel le bossage ou le méplat (148) a une épaisseur (E4) qui représente entre 75% et 100% de l'épaisseur (E3) de la plaque (116).

13. Dispositif (110) selon l'une des revendications précédentes, dans lequel l'olive (118) a une capacité de déformation élastique par compression axiale, par serrage de ladite vis (20).

14. Dispositif (110) selon l'une des revendications précédentes, dans lequel la plaque (116) est réalisée dans un matériau choisi parmi un alliage métallique et un matériau élastiquement déformable.

15. Dispositif (110) selon l'une des revendications précédentes, dans lequel l'olive (118) est réalisée dans un matériau choisi parmi un alliage métallique et un matériau élastiquement déformable.

16. Circuit de fluide (200), par exemple de climatisation ou de direction assistée, pour un véhicule en particulier automobile, comportant au moins un dispositif (110) selon l'une des revendications précédentes.
